# EUROPEAN PATENT APPLICATION

(11) **EP 4 528 885 A1**
(43) Date of publication of application: **26.03.2025**
(21) Application number: 23198890.8
(22) Date of filing: 21.09.2023
(51) Int. Cl.: H01M 10/613, H01M 10/625, H01M 10/6557, H01M 50/204, H01M 50/249, H01M 50/271, H01M 50/289, H01M 50/502, B60K 1/04, B60L 50/60

(54) **A BODY COMPONENT FOR A VEHICLE BODY**

(71) Applicant: Volvo Car Corporation, 405 31 Göteborg (SE)
(72) Inventor: KARLSSON, Daniel, 40531 Göteborg (SE); HJÄLM WALLBORG, Martin, 40531 Göteborg (SE); PERSSON, Klas, 40531 Göteborg (SE)
(74) Representative: Maiwald GmbH

(57) **Abstract**

The disclosure relates to a body component (10) for a vehicle body (100), the body component (10) being configured for housing a vehicle battery comprising multiple battery cells (200), the body component (10) comprising an underbody section (11) configured to form at least part of the vehicle body (100), and a battery housing structure (12) arranged on at the underbody section (11), the battery housing structure (12) comprising multiple compartment walls (13), the multiple compartment walls (13) partitioning the battery housing structure (12) into multiple compartments (14), each one of the multiple compartments (14) being suitable for accommodating one of the multiple battery cells (200), and at least one of the multiple compartment walls (13) comprising at least one flow channel (15) configured for conveying a coolant for cooling at least one of the multiple battery cells (200).

## Description

### TECHNICAL FIELD

The present disclosure relates to a body component for a vehicle body, a battery pack comprising the body component, a vehicle comprising the battery pack, a method for producing the battery pack, and a mold configured for casting the body component.

### BACKGROUND ART

Vehicles, particularly electrical vehicles, may comprise battery packs installed on a vehicle body to provide electric power to the vehicle. Battery packs are complex systems comprising multiple battery cells and a cooling system for preventing over-heating of the battery cells. Today, vehicle bodies and battery packs are built separately and joined together at a later phase of production. Joining thereof requires handling of sensitive battery cells and cooling systems, and arranging these in a compact manner on the vehicle body. Interfaces formed between the separate battery packs and the vehicle bodies may have negative effects, such as added weight, costs and cause inefficiencies, especially thermal inefficiencies.

Such interfaces may comprise different connection means used for connecting the battery packs to the vehicle bodies, for instance bolts, which may additionally require sealing thereof. Every additional connection means may affect stiffness of the vehicle in a negative manner. Connection means also require a downstream production footprint, leading to additional product cost. Furthermore, accommodating connection means and/or sealing is causing a wasted space that could otherwise be used more efficiently. Additionally, separate installation of battery packs and cooling system on the vehicle body causes a reduction in cooling capacity, affecting the thermal efficiency of the battery. An efficient arrangement of the cooling system in the battery pack is also crucial for improving a driving range of the vehicles with battery packs.

Recently, attempts have been made to co-engineer battery packs and vehicle bodies with an intention of providing a compact and efficient installation. However, a high number SE:DS
of interfaces between these elements remain, and still cause inefficiencies.

### SUMMARY

The problem is at least partially solved or alleviated by the subject matter of the independent claims of the present disclosure, wherein further examples are incorporated in the dependent claims.

According to a first aspect, there is provided a body component for a vehicle body. The body component is configured for housing a vehicle battery comprising multiple battery cells. The body component comprises an underbody section configured to form at least part of the vehicle body and a battery housing structure at the underbody section. The battery housing structure comprises multiple compartment walls. The multiple compartment walls partition the battery housing structure into multiple compartments. Each one of the multiple compartments is configured to accommodate one of the multiple battery cells. At least one of the multiple compartment walls comprises at least one flow channel configured for conveying a coolant for cooling at least one of the multiple battery cells.

The body component comprises multiple compartment walls forming multiple compartments at the underbody section of the body component. The multiple compartment walls may comprise multiple walls added to each other to form a single wall structure or may be formed of a single wall. The vehicle body may be a frame upon which vehicle components can be built. The underbody section of the body component may be provided at a lower part of the body component. For instance, the underbody section may comprise a section of a chassis of the vehicle, such as a base of the vehicle body. Inside each compartment a battery cell of the vehicle battery may be accommodated. By forming the underbody section of the body component integral to the vehicle body, a need for a separate housing structure for the battery cells may be avoided. Accordingly, state of the art technology of providing a battery pack comprising battery cells, and installing the battery pack on a vehicle body may be improved.

By providing the body component as a part of the vehicle body, interfaces between the vehicle body and the battery pack may be reduced, thereby making the vehicle lighter. Furthermore, usage of any connection means for fastening the battery pack on the vehicle body may be reduced or even avoided. The compartment walls partitioning the battery housing structure may allow utilization of the battery housing structure efficiently. The number of compartment walls may be optimized. The battery housing structure may be divided optimally.

To maintain optimal performance and longevity of the battery pack, vehicles may incorporate a thermal management system. The thermal management system may comprise the at least one flow channel for circulating a cooling liquid therethrough for regulating a temperature of the battery cells. The flow channel may also be referred to as a cooling channel. The coolant may be conveyed through the flow channel or, in other words, flow therethrough to pass one or more battery cells, in effect, cooling them. The coolant may be any fluid, in particular any liquid, such as water, for example. An antifreeze agent, such as ethylene glycol, for example, may be included in the coolant. The at least one flow channel may be a single channel or a combination of channels connected to one another. The at least one flow channel may be provided inside the compartment wall or at least one side of the compartment wall. When the at least one flow channel is provided inside the compartment wall, cooling of multiple battery cells at opposite sides of the wall may be achieved. Whereas, when the at least one flow channel is provided at either side of the compartment wall, the battery cells on a respective side of the compartment wall may be cooled. In any case, providing the at least one flow channel at the compartment wall may prevent fixing of the flow channel on an additional component of the vehicle body. Providing the at least one flow channel at the multiple compartment wall provides an efficient cooling of the battery cells. Heat or energy losses caused by inefficient utilisation of the battery housing structure may be minimized.

According to an example, the multiple compartments may be arranged in a honeycomb pattern. A honeycomb pattern may be a repeated arrangement of compartments. The honeycomb pattern may have radial symmetry. Although a honeycomb may be a hexagon structure (a six-sided polygon with straight sides and angles), it may have any number of sides ranging from three (as in a triangle) to eight (octahedral) or more up to a round shape for round battery cells. The compartments may be of a uniform size and/or shape. In principle, the compartments may be surrounded by other compartments from each side, in other words, by a number of other compartments equal to a number of sides of the compartment. This may provide a uniform distribution of the compartments on the battery housing structure.

In an example, the compartments may have any shape, such as a circular. According to the invention, such an arrangement may be also called honeycomb pattern. The compartments may be of a uniform size and/or shape. Maintaining consistent dimensions throughout the body component may contribute to structural stability.

According to an example, the body component may be monolithic. Monolithic may mean that the part of the vehicle body may be configured to form the body component. For instance, the body component may be directly on the chassis. The chassis may provide structural support and/or may form a foundation for various vehicle systems. The body component may be at a part of the chassis (vehicle body), whereas other parts of the chassis may be used for housing, for instance at least one of the engine, transmission, suspension, or wheels. Especially, while the underbody section of the body component is configured to form a part of the vehicle body, another section of the body component, for instance an upperbody section on the underbody section, may be configured to house components such as electrical connections, a cover element and/or a means for insulating the battery housing structure at the underbody section.

According to an example, the body component may further comprise at least one flow inlet and at least one flow outlet. The at least one flow inlet may be arranged at a side of the body component opposite to the flow outlet. The at least one flow channel may be arranged between the flow inlet and the flow outlet. A coolant may flow from the flow inlet, through the flow channel and to the flow outlet. The coolant may be circulated from the flow outlet to the flow inlet. A heat exchange means may cool down the coolant before the coolant circulates back to the flow inlet. Providing the flow inlet and the flow outlet on the body component provides a simple and compact design for cooling the battery cells placed on the body component. Additional installation of a cooling system on the body component may be avoided.

According to an example, at least a section of the at least one flow channel may have a serpentine shape. The serpentine shape may be defined as curves that transition from one side of a battery cell to an opposite side of a consecutive battery cell. The shape may be depicted as an "S" shape, two consecutive battery cells being provided on recesses on opposite sides. An arrangement of the flow channel between the consecutive battery cells may increase a surface of heat exchange between the flow channel and the battery cells and thereby provide an improved cooling for the battery cells.

According to an example, the body component may further comprise a cover at a top of at least one of the multiple compartments. The cover may be configured to house at least one busbar component connecting at least two battery cells with each other. The connection between the two battery cells may be an electrical connection. The connection can be additionally a mechanical connection. At least a section of the at least one flow channel may be configured for cooling the busbar component or, in other words, conveying the coolant for cooling the busbar component. The cover may be positioned at the upperbody section of the body component. The flow channel may be housed at least partially by the cover.

The busbar may provide a low-resistance path for electrical current to flow between the battery cells. As the busbars are usually made from materials with high electrical conductivity, such as copper or aluminum, while efficient transmission of electrical current may be achieved, busbars may dissipate high levels of heat. Accordingly, cooling thereof may support efficient working of the vehicle. The cover housing the busbar component may help to prevent heat dissipation outside of the body component and efficient cooling thereof at place.

The section of the at least one flow channel at the top of the compartments may provide a cooling of the battery cells placed inside the compartments from a top side, in addition to the cooling from the at least one flow channel at the compartment walls, preferably at a side of the battery cell placed inside the compartment. Accordingly, by providing the section of the at least one flow channel to cool down the busbar housed by the cover, an increased heat exchange may be provided from multiple sides of the battery cells placed inside the compartments.

According to an example, at least one of the multiple compartment walls may comprise at least two flow channels. The flow channels may be arranged adjacent to each other. The flow channels may be essentially parallel to each other or arranged angularly. When there are more than two flow channels, the flow channels may be arranged at equal intervals or may be concentrated at an upper or a lower section of the compartment wall. The section where the flow channels are concentrated may correspond to a part of the battery cell which heats up more, for instance at an upper part of the compartment wall corresponding to battery cell electrodes.

According to an example, the body component may comprise a sealing shelf on top of the battery housing structure. The body component may further comprise a further adhesive between the sealing shelf and at least one of the compartment walls of the battery housing structure. The adhesive between the sealing shelf and the compartment wall may fix the sealing shelf on the battery housing structure while providing an electrical insulation of the battery cells from each other.

According to a second aspect, there is provided a battery pack comprising the body component according to the first aspect and a vehicle battery. The vehicle battery comprises multiple battery cells. Each one of the multiple battery cells is provided in a respective one of the multiple compartments of the body component.

The battery pack may function as a structural support to secure the battery cells within the compartments of the body component. The battery pack may distribute weight and minimize vibrations. The battery cells may be electrically connected with each other, preferably by the busbar component, to achieve a desired voltage and/or capacity level.

According to an example, at least one of the multiple compartments may comprise a space between the compartment wall and the battery cell inside the compartment. The compartments may have a size and/or shape corresponding to a commercial battery cell. Different types of batteries, such as lithium-ion, nickel-metal hydride (NiMH), and lead-acid, may have different sizes. Among these, lithium-ion batteries may be seen as most commonly used in (electric) vehicles. As an example, the compartments may have a suitable shape to accommodate a cylindrical cell with a diameter of around 21 mm and a length of 70 mm. Of course, the battery cells may have a prismatic form or a pouch form. The space between the compartment wall and the battery cell may for example range from 5 mm to 0,5 mm in diameter, for example being 2 mm.

According to an example, the space may be filled with adhesive. The adhesive may provide mechanical stability, electrical isolation, and/or heat conduction. The adhesive may hold the battery cells in the respective compartments within the battery pack, prevent movement and minimize vibrations that could lead to physical stress on the battery cells. Further, it can enhance a structural integrity of the battery pack by reinforcing joints and connections between the battery cells. The adhesive may have good thermal conductivity, which may help facilitate transfer of heat generated during charging and/or discharging away from the battery cells, contributing to effective thermal management. The adhesive may have insulating properties for preventing electrical contact between adjacent cells, reducing a risk of short circuits and ensuring proper electrical isolation. Last but not least, the adhesive can be applied in a thin layer, allowing for a compact and efficient use of the space within the battery pack. An assembly may be therewith simplified, and usage of additional mechanical fastening components may be avoided.

According to an example, the vehicle battery may comprise at least one busbar component connecting at least two battery cells. At least a cover of the body component may house the busbar component. At least a section of the at least one flow channel may be configured for cooling the busbar component. The busbar component may be a metallic strip or bar that serves as a conductor for distributing electrical current from one battery cell to another, and/or for distributing electrical energy collected from the battery cells to various equipment of the vehicle.

A sealing shelf may be provided on top of the battery housing structure. A further adhesive between the sealing shelf and at least one of the compartment walls of the battery housing structure may be configured to fix the sealing shelf on the battery housing structure while providing an electrical insulation of the battery cells from each other. The sealing shelf may comprise at least an opening for a connection with the busbar component of the battery cell.

According to the previous example, the cover may further comprise an elevated portion extending away from the at least one of the multiple battery cells. The elevated portion may be configured to house the busbar component and the section of the at least one flow channel. The elevated portion may provide a space for housing the busbar component and the section of the flow channel therein further away from the battery cells. Thereby, the elevated portion may help dissipating heat away from the busbar component.

According to a third aspect, there is provided a vehicle comprising a battery pack according to the second aspect.

In an example, the vehicle may further comprise at least a second body component joined to the body component (as in the first aspect). The second body component may be different to the body component of the first aspect such that they together form the vehicle body.

According to a fourth aspect, there is provided a method for producing the battery pack of the second aspect. The method comprises
- providing the body component of the first aspect, and
- providing each one of the multiple battery cells of the vehicle battery in a respective one of the multiple compartments of the body component.

According to a fifth aspect, there is provided a mold configured for casting the body component according to the first aspect. The mold may be configured such that the body component may be casted in a single step. The mold may comprise a core part for creating a cavity inside the casted body component, for instance for forming the compartments.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows schematically and exemplarily a vehicle body 100, according to the disclosure.
- Figure 2: shows schematically and exemplarily a battery pack 20 of the vehicle body 100, according to the disclosure.
- Figure 3: shows schematically and exemplarily a body component 10 of the battery pack 20, according to the disclosure.
- Figure 4: shows schematically and exemplarily the battery pack 20 from another perspective, according to the disclosure.
- Figure 5: shows schematically and exemplarily a flow diagram of a method 300 for producing the battery pack 20, according to the disclosure.

### DETAILED DESCRIPTION

The Figures are merely schematic representations and serve only to illustrate examples of the disclosure. Identical or equivalent elements are in principle provided with the same reference signs.

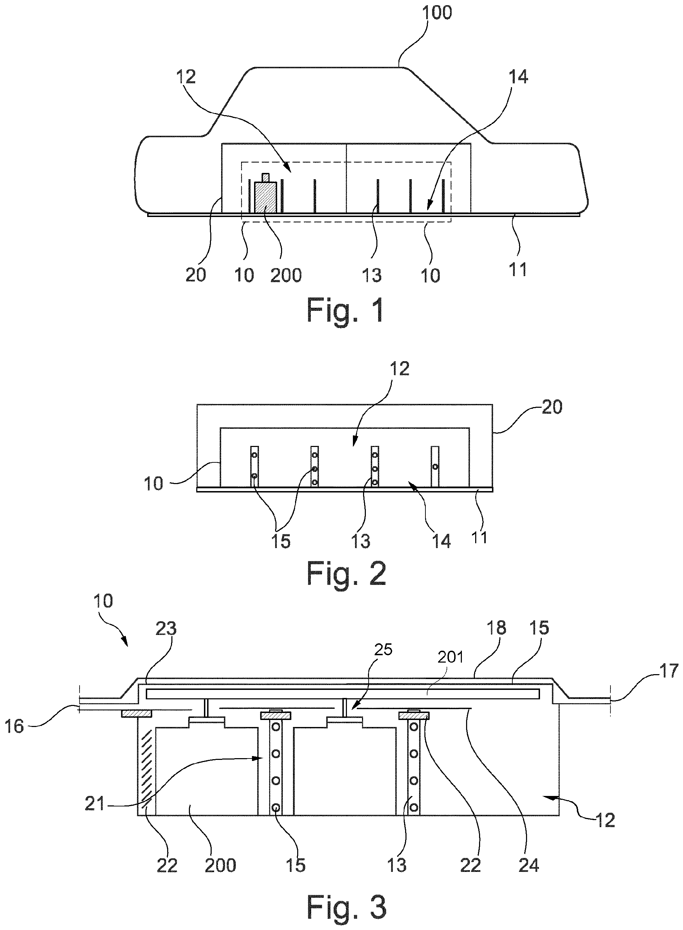

Figure 1 shows schematically and exemplarily a vehicle body 100. The vehicle body 100 comprises a battery pack 20. The battery pack 20 comprises a body component 10 arranged next to another body component 10. The body component 10 comprises an underbody section 11. The underbody section 11 is configured to form at least part of the vehicle body 100. Here the underbody section 11 is a based of the vehicle body 100. The body component 10 further comprises a battery housing structure 12 at the underbody section 11. The battery housing structure 12 comprises multiple compartment walls 13 partitioning the battery housing structure 12 into multiple compartments 14. In Figure 1, one of the multiple compartments 14 is accommodating one of the multiple battery cells 200.

Figure 2 shows schematically and exemplarily the battery pack 20. The battery pack 20 comprises the body component 10. The battery housing structure 12 of the body component 10 comprises multiple compartment walls 13 partitioning the battery housing structure 12 into multiple compartments 14. The compartment walls 13 comprise flow channels 15 configured for cooling at least one of the multiple battery cells 200 (not depicted in Fig. 2). The multiple compartment walls 13 comprise at least two flow channels 15. The flow channels 15 are arranged adjacent to each other. The flow channels 15 may be essentially parallel to each other or arranged angularly. From a cross-sectional view, the flow channels 15 are depicted to be parallel to each other. The section of the compartment wall 13 where the flow channels 15 are concentrated may correspond to a part of the battery cell 200 that heats up more than a rest of the battery cell 200, for instance at an upper part of the compartment wall 13 corresponding to battery cell electrodes (not depicted).

Figure 3 shows schematically and exemplarily the body component 10 of the battery pack 20. The body component 10 comprises two battery cells 200 distributed to two of the multiple compartments 14. The compartments 14 comprise a space 21 between the compartment wall 13 and the battery cell 200 inside the compartment 14. One of the multiple spaces 21 is schematically illustrated to be filled with an adhesive 22. A sealing shelf 24 is provided on top of the battery housing structure 12. A further adhesive 22 between the sealing shelf 24 and at least one of the compartment walls 13 of the battery housing structure 12 is configured to fix the sealing shelf 24 on the battery housing structure 12. The further adhesive also provides an electrical insulation of the battery cells 200 from each other. The adhesive 22 and the further adhesive 22 may be of a same material or may be of a different material. The sealing shelf 24 comprises at least an opening 25 for a connection with the busbar component 201 of the battery cell 200. The connection may extend through consecutive openings 25 of two consecutive busbar components 201 for connecting the battery cells 200 with each other.

As depicted in Figure 3, the body component 10 further comprises a cover 18 at a top of the multiple compartments 14. The cover 18 houses the busbar component 201 connecting at least two battery cells 200 with each other. The section of the at least one of the flow channels 15 for cooling the busbar component 201 is provided at the cover 18, in other words underneath the cover 18. More specifically, the section of the flow channel 15 is provided at an elevated portion 23 of the cover 18 extending away from the multiple battery cells 200.

As shown in Figure 3, the body component 10 comprises at least one flow inlet 16 and at least one flow outlet 17. The flow channel 15 is arranged between the flow inlet 16 and the flow outlet 17. A coolant may flow from the flow inlet 16, through the flow channel 15 and to the flow outlet 17. The compartment walls 13 in this example comprise flow channels 15 in different numbers to illustrate the diversity of cooling capacity, which may be provided by altering the number of the flow channels 15 in the compartment walls 13, however, the number of flow channels 15 can also be equal in each compartment wall 13.

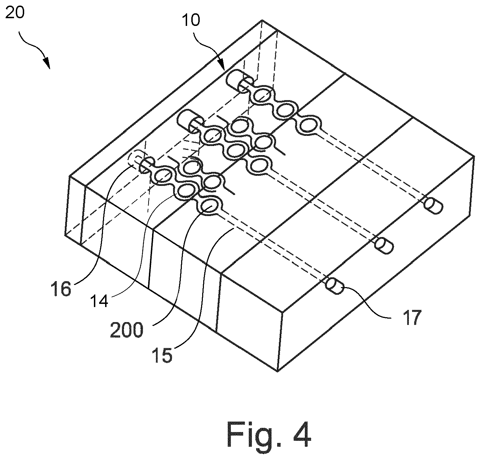

Figure 4 shows schematically and exemplarily the battery pack 20 from another perspective. The body component 10 comprises multiple flow inlets 16 and multiple flow outlets 17. The flow inlets 17 are arranged at a side of the body component 10 opposite to the flow outlets 17. The flow channels 15 are arranged between the flow inlets 16 and the flow outlets 17. Figure 4 shows multiple body components 10 from perspective and in parallel to one another, inside an exemplary battery pack 20. The battery cells 200 are provided in multiple compartments 14 that are arranged in a partial honeycomb pattern, showing only a few rows of the honeycomb pattern, without showing a few of the rows in between, for sake of clarity. Here, the compartments 14 of the honeycomb pattern have a circular shape. The cover 18 and the sealing shelf 24 are omitted in Figure 4.

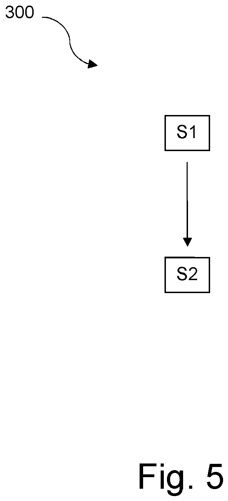

Figure 5 shows schematically and exemplarily a flow chart of the method 300 for producing the battery pack 20. The method 300 comprises providing the body component S 1, and providing each one of the multiple battery cells 200 of the vehicle battery in a respective one of the multiple compartments 14 of the body component S2.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

**LIST OF REFERENCE SIGNS**

| | |
|---|---|
| Body component | 10 |
| vehicle body | 100 |
| battery cells | 200 |
| method | 300 |
| underbody section | 11 |
| battery housing structure | 12 |
| compartment wall | 13 |
| compartment | 14 |
| flow channel | 15 |
| flow inlet | 16 |
| flow outlet | 17 |
| cover | 18 |
| battery pack | 20 |
| busbar component | 201 |
| space | 21 |
| adhesive | 22 |
| elevated portion | 23 |
| sealing shelf | 24 |
| method step | S1, S2 |

## Claims

1. A body component (10) for a vehicle body (100), the body component (10) being configured for housing a vehicle battery comprising multiple battery cells (200), the body component (10) comprising:
- an underbody section (11) configured to form at least part of the vehicle body (100), and
- a battery housing structure (12) at the underbody section (11), the battery housing structure (12) comprising multiple compartment walls (13), the multiple compartment walls (13) partitioning the battery housing structure (12) into multiple compartments (14), each one of the multiple compartments (14) being configured to accommodate one of the multiple battery cells (200), and at least one of the multiple compartment walls (13) comprising at least one flow channel (15) configured for conveying a coolant for cooling at least one of the multiple battery cells (200).

2. The body component (10) according to claim 1, wherein the multiple compartments (14) are arranged in a honeycomb pattern.

3. The body component (10) according to any one of the previous claims, wherein the body component (10) is monolithic.

4. The body component (10) according to any one of the previous claims, wherein the body component (10) further comprises at least one flow inlet (16) and at least one flow outlet (17), the at least one flow inlet (16) being arranged at a side of the body component (10) opposite to the flow outlet (17), the at least one flow channel (15) being arranged between the flow inlet (16) and the flow outlet (17).

5. The body component (10) according to any one of the previous claims, wherein at least a section of the at least one flow channel (15) has a serpentine shape.

6. The body component (10) according to any one of the previous claims, wherein the body component (10) further comprises a cover (18) at a top of at least one of the multiple compartments (14), wherein the cover (18) is configured to house at least one busbar component (201) electrically connecting at least two battery cells (200) with each other, and wherein at least a section of the at least one flow channel (15) is configured for cooling the busbar component (201).

7. The body component (10) according to any one of the previous claims, wherein at least one of the multiple compartment walls (13) comprises at least two flow channels (15) being arranged adjacent to each other.

8. A battery pack (20) comprising a body component (10) according to any one of the claims 1-7 and a vehicle battery comprising multiple battery cells (200), wherein each one of the multiple battery cells (200) is provided in a respective one of the multiple compartments (14) of the body component (10).

9. The battery pack (20) according to claim 8, wherein at least one of the multiple compartments (14) comprises a space (21) between the compartment wall (13) and the battery cell (200) inside the compartment (14).

10. The battery pack (20) according to claim 9, wherein the space (21) is filled with adhesive (22).

11. The battery pack (20) according to any one of the claims 8-10, wherein the vehicle battery comprises at least one busbar component (201) connecting at least two battery cells (200), at least a cover (18) of the body component (10) housing the busbar component (201) and at least a section of the at least one flow channel (15) being configured for cooling the busbar component (201).

12. The battery pack (20) according to claim 11, wherein the cover (18) further comprises an elevated portion (23) extending away from the at least one of the multiple battery cells (200), wherein the elevated portion (23) is configured to house the busbar (201) component and the section of the at least one flow channel (15).

13. A vehicle comprising a battery pack (20) according to any one of the claims 8-12.

14. A method (300) for producing a battery pack (20) according to any one of the claims 8 -12, comprising:
- providing a body component (10) according to any one of the claims 1-7 (S1), and
- providing each one of multiple battery cells (200) in a respective one of multiple compartments (14) of the body component (S2).

15. A mold configured for casting a body component (10) according to any one of the claims 1-7.

## Amended claims

### Amended claims in accordance with Rule 137(2) EPC.

1. A vehicle body (100) comprising a body component (10), the body component (10) being configured for housing a vehicle battery comprising multiple battery cells (200), the body component (10) comprising:
- an underbody section (11) configured to form at least part of the vehicle body (100), and
- a battery housing structure (12) at the underbody section (11), the battery housing structure (12) comprising multiple compartment walls (13), the multiple compartment walls (13) partitioning the battery housing structure (12) into multiple compartments (14), each one of the multiple compartments (14) being configured to accommodate one of the multiple battery cells (200), and at least one of the multiple compartment walls (13) comprising at least one flow channel (15) configured for conveying a coolant for cooling at least one of the multiple battery cells (200).

2. The vehicle body (100) according to claim 1, wherein the multiple compartments (14) are arranged in a honeycomb pattern.

3. The vehicle body (100) according to any one of the previous claims, wherein the body component (10) is monolithic.

4. The vehicle body (100) according to any one of the previous claims, wherein the body component (10) further comprises at least one flow inlet (16) and at least one flow outlet (17), the at least one flow inlet (16) being arranged at a side of the body component (10) opposite to the flow outlet (17), the at least one flow channel (15) being arranged between the flow inlet (16) and the flow outlet (17).

5. The vehicle body (100) according to any one of the previous claims, wherein at least a section of the at least one flow channel (15) has a serpentine shape.

6. The vehicle body (100) according to any one of the previous claims, wherein the body component (10) further comprises a cover (18) at a top of at least one of the multiple compartments (14), wherein the cover (18) is configured to house at least one busbar component (201) electrically connecting at least two battery cells (200) with each other, and wherein at least a section of the at least one flow channel (15) is configured for cooling the busbar component (201).

7. The vehicle body (100) according to any one of the previous claims, wherein at least one of the multiple compartment walls (13) comprises at least two flow channels (15) being arranged adjacent to each other.

8. The vehicle body (100) according to any one of the claims 1-7, wherein the vehicle body (100) comprises a vehicle battery comprising multiple battery cells (200), wherein each one of the multiple battery cells (200) is provided in a respective one of the multiple compartments (14) of the body component (10).

9. The vehicle body (100) according to claim 8, wherein at least one of the multiple compartments (14) comprises a space (21) between the compartment wall (13) and the battery cell (200) inside the compartment (14).

10. The vehicle body (100) according to claim 9, wherein the space (21) is filled with adhesive (22).

11. The vehicle body (100) according to any one of the claims 8-10, wherein the vehicle battery comprises at least one busbar component (201) connecting at least two battery cells (200), at least a cover (18) of the body component (10) housing the busbar component (201) and at least a section of the at least one flow channel (15) being configured for cooling the busbar component (201).

12. The vehicle body (100) according to claim 11, wherein the cover (18) further comprises an elevated portion (23) extending away from the at least one of the multiple battery cells (200), wherein the elevated portion (23) is configured to house the busbar (201) component and the section of the at least one flow channel (15).

13. A vehicle comprising a vehicle body (100) according to any one of the claims 1-12.

14. A method (300) for producing a vehicle body (100) according to any one of the claims 8 -12, comprising:
- providing a body component (10) according to any one of the claims 1-7 (S1), and
- providing each one of multiple battery cells (200) in a respective one of multiple compartments (14) of the body component (S2).

15. A mold configured for casting a vehicle body (100) according to any one of the claims 1-12.
